# EUROPÄISCHE PATENTSCHRIFT

(11) **EP 1 580 052 B1**
(45) Veröffentlichungstag und Bekanntmachung des Hinweises auf die Patenterteilung: **16.05.2007**
(21) Anmeldenummer: 05005824.7
(22) Anmeldetag: 17.03.2005
(51) Int. Cl.: B60H 1/32, B60H 1/00

(54) **Fahrzeug-Klimaanlage**
Vehicle air conditioning unit
Dispositif de climatisation pour véhicule

(30) Priorität: 24.03.2004 DE 102004014812
(43) Veröffentlichungstag der Anmeldung: 28.09.2005
(73) Patentinhaber: GM Global Technology Operations, Inc., Detroit, MI 48265-3000 (US)
(72) Erfinder: Lücke, Dirk, 55128 Mainz (DE)
(74) Vertreter: Strauss, Peter

(56) Entgegenhaltungen:
- WO-A-01/87656
- DE-A1- 2 204 950
- US-A- 4 036 029
- US-A1- 2002 020 183

## Beschreibung

Die Erfindung betrifft ein Kraftfahrzeug mit Klimaanlage.

Frühere Klimaanlagen nutzten Fluorchlorkohlenwasserstoffe (so genannte FCKW, beispielsweise R11 bzw. R12) als Kältemittel. Diese haben den Nachteil, schädigend auf die Ozonschicht zu wirken und wurden deshalb in neueren Kälteanlagen durch Kältemittel auf Basis teilfluorierter Kohlenwasserstoffe (beispielsweise R134a) ersetzt, welchen dieses ozonschädigende Potential nicht innewohnt. Ein grundsätzlicher Vorteil der Anwendung von CO₂ (R744) liegt im Gegensatz zur Anwendung anderer Kältemittel darin, dass das Kältemittel einerseits breit verfügbar und kostengünstig ist und sich andererseits keine Belastung der Umwelt ergeben kann.

Ein Kraftfahrzeug mit einer mit CO₂ arbeitenden Klimaanlage nach dem Oberbegriff des Anspruchs 1 ist aus US 2002/0020183 A1 bekannt.

In aktuellen Kraftfahrzeugen, welche mit Klimaanlagen ausgestattet sind, die mit R134a als Kältemittel arbeiten, werden motorfeste Kompressoren und karosseriefeste Wärmetauscher (Verflüssiger) eingesetzt, welche über flexible Anteile (z.B.

Schlauchstücke) in der Klimaleitung (Discharge-Leitung) verfügen. Die Klimaleitung wird dabei durch die Relativbewegung zwischen Motor und Karosserie, den Druck im Klimasystem (ca. 30 bar) und die Temperatur (bis ca. 120°C) belastet.

Bei der Verwendung von R744 als Kältemittel müssen dessen thermodynamische Eigenschaften berücksichtigt werden, aufgrund derer weitaus höhere Drücke im System auftreten (Maximaldruck: ca. 130 bar) . Zudem liegt die Maximaltemperatur des Kältemittels höher (Maximaltemperatur > 165°C). Das CO₂ kann mit einer Temperatur von etwa 150°C in den Wärmetauscher (Gaskühler) eintreten und wird durch den Kühlluftstrom etwa auf Umgebungstemperatur herunter gekühlt. Die relativ hohe Eintrittstemperatur des Gases bringt erhebliche Materialbeanspruchungen des aus Aluminiumblechen gefertigten Gaskühlers mit sich, was bei dessen Auslegung, zusätzlich zu den extrem hohen Drücken, die in CO₂-Kreisläufen vorherrschen, entsprechend zu berücksichtigen ist und sich gewöhnlich in größeren Blechdicken bzw. in druckstabilerer Gestaltung niederschlägt.

Aus all dem folgt, dass die für Klimaanlagen auf Basis des Kältemittels R134a bekannte und auch in US 2002/0020183 beschriebene Anordnung mit motorfesten Kompressoren und karosseriefesten Wärmetauschern für den Einsatz von R744 nicht optimal ist, da die flexiblen Anteile (z.B. Schlauchstücke) in der Klimaleitung (Discharge-Leitung) durch noch höhere Drücke und Temperaturen belastet werden, was deren Dauerhaltbarkeit verringert und zu Ausfällen der Klimaanlage führen kann.

Aus US 4 036 029 ist eine Kraftfahrzeug-Klimaanlage bekannt, bei der Verdichter und Wärmetauscher zu einer Baugruppe zusammengefasst sind, die als Ganzes um eine fest mit dem Motor des Fahrzeugs verbundene Welle drehangetrieben ist.

Der Erfindung liegt die Aufgabe zugrunde, ein Kraftfahrzeug mit einer betriebssichereren Klimaanlage auf Basis des Kältemittels R744 bereitzustellen, die auf einfache Weise eine schnelle Kühlwirkung beim Start des Fahrzeugs erzielt. Eine weitere Aufgabe ist, ein Kraftfahrzeug mit Klimaanlage zu schaffen, dessen Motor nach dem Start schnell einen effizienten und umweltfreundlichen Betriebszustand erreicht.

Die Aufgaben werden gelöst durch ein Kraftfahrzeug mit den Merkmalen des Anspruchs 1. Die Möglichkeit, den Wärmetauscher über den Kühlkreislauf des Motors zu kühlen, trägt insbesondere im geringen Lastbereich des Motors des Kraftfahrzeuges und in Startphasen desselben dazu bei, dass die Klimaanlage ihre Kühlwirkung schneller entfaltet; ferner bewirkt sie eine schnelle Erwärmung des Kühlkreislaufs des Motors und damit des Motors selbst, die erforderlich ist, damit der Motor effizient und umweltfreundlich arbeitet.

Die Einheit aus Motor und Getriebe wird im Rahmen der vorliegenden Anmeldung als Powertrain bezeichnet. Der Begriff "powertrainfest" kennzeichnet daher die feste Verbindung zwischen einem Bauteil und dem Motor bzw. Getriebe. Der Wärmetauscher ist im Rahmen der vorliegenden Erfindung im Hinblick auf das Kältemittel R744 vorzugsweise als Gaskühler ausgestaltet.

In bevorzugten Ausführungsformen der vorliegenden Erfindung sind sowohl der Verdichter als auch der Wärmetauscher powertrainfest. Die Verbindung zwischen beiden erfolgt dann über eine ebenfalls powertrainfest ausgestaltete Klimaleitung für das Kältemittel R744 (nachfolgend auch als A/C-Leitung bzw. Discharge-Leitung bezeichnet). Besonders bevorzugte erfindungsgemäße Fahrzeug-Klimaanlagen sind daher dadurch gekennzeichnet, dass der Wärmetauscher über eine powertrainfeste Leitung mit dem Verdichter verbunden ist.

Es ist erfindungsgemäß möglich, die powertrainfest angeordnete Discharge-Leitung ganz oder teilweise flexibel auszugestalten, beispielsweise durch Ausführung als Rippenschlauch. Bevorzugte Discharge-Leitungen sind aber starr, so dass besonders bevorzugte Fahrzeug-Klimaanlagen dadurch gekennzeichnet sind, dass die powertrainfeste Leitung ohne flexible Elemente ausgestaltet ist.

Die Discharge-Leitung verbindet Verdichter und Wärmetauscher und kann mit beiden jeweils über lösbare Schraubverbindungen verbunden sein. Es ist erfindungsgemäß aber auch möglich, den Wärmetauscher mit einer fest an ihm angebrachten Discharge-Leitung zu versehen und die Verbindung zum Verdichter über lösbare Schraubverbindungen herzustellen. Die feste Verbindung zwischen Wärmetauscher und Discharge-Leitung kann beispielsweise durch Schweißen, Hartlöten, Löten oder Crimpen erfolgen.

Zusammenfassend sind erfindungsgemäße Fahrzeug-Klimaanlagen bevorzugt, bei denen die powertrainfeste Leitung über lösbare Schraubverbindungen mit dem Verdichter verbunden ist. Im Hinblick auf die Verbindung zwischen Wärmetauscher und Discharge-Leitung sind sowohl Fahrzeug-Klimaanlagen, bei denen die powertrainfeste Leitung über lösbare Schraubverbindungen mit dem Wärmetauscher verbunden ist, als auch Fahrzeug-Klimaanlagen, bei denen die powertrainfeste Leitung mit dem Wärmetauscher fest verbunden ist, bevorzugt.

Als Material für die Discharge-Leitung bieten sich die Materialien an, die auch üblicherweise im Fahrzeugbau für Wärmetauscher verwendet werden. Bevorzugt sind Aluminium und dessen Legierungen, beispielsweise mit Magnesium, oder Stahl. Demnach sind bevorzugte erfindungsgemäße Fahrzeug-Klimaanlagen dadurch gekennzeichnet, dass die powertrainfeste Leitung aus Aluminium, dessen Legierungen oder Stahl gefertigt ist.

Durch die powertrainfeste Ausführung von Wärmetauscher und Discharge-Leitung kann die Leitung in einfacher und kostengünstiger Weise hochdruck- und hochtemperaturfest ausgeführt werden. Temperatur- und druckkritische flexible Verbindungsstücke, insbesondere die Verbindungsstellen zum Ausgleich der Motorbewegung, entfallen. Hierdurch wird die Herstellung der Leitung vereinfacht und damit die Leitung deutlich kostengünstiger. Montagevorgänge zur Implementierung von flexiblen Schlauchanteilen aus Metall oder Kunststoff entfallen. Zudem wird die Dauerhaltbarkeit der hochdruck- und hochtemperaturfesten Leitung erhöht, und potentielle Leckagestellen werden vermieden.

Um die Leistung des Wärmetauschers zu verbessern, kann die powertrainfeste Discharge-Leitung in wärmeleitenden Kontakt mit dem Kühlsystem des Fahrzeugs gebracht werden. Hierbei wird die Tatsache ausgenutzt, dass die Temperatur des Motor-Kühlmittels bei heißen Umgebungsbedingungen wesentlich unter der Temperatur des Gases am Eintritt in den Gaskühler liegt. Durch diese Maßnahme kann die Eintrittstemperatur des Kühlmittels R 744 vorab abgesenkt werden. Demzufolge kann bei der Auslegung der Wärmetauscher (Gaskühler) eine niedrigere Temperatur berücksichtigt werden, was sich in geringeren Material- bzw. Fertigungskosten niederschlägt. Demnach muss der Gaskühler lediglich unter dem Gesichtspunkt der maximal auftretenden Drücke ausgelegt werden. Temperaturwechselbelastungen spielen dann nur noch eine untergeordnete oder zumindest eine geringere Rolle.

Bevorzugte erfindungsgemäße Fahrzeug-Klimaanlagen sind daher dadurch gekennzeichnet, dass die powertrainfeste Discharge-Leitung kühlwassergekühlt ausgebildet ist.

In solchen bevorzugten Fahrzeug-Klimaanlagen ist die Discharge-Leitung (Zuströmleitung zum CO₂-Gaskühler) als Wärmetauscher ausgebildet. Sie steht dabei in wärmetauschendem Kontakt mit dem durch den Kühlmittelkühler strömenden Kühlmittel und/oder mit dem Kühlluftstrom, um so eine Vorkühlung des Kühlmittels R744 zu erreichen.

In bevorzugten Ausführungsformen der vorliegenden Erfindung arbeitet der Wärmetauscher (Gaskühler) nach dem Kreuzgegenstrom-Prinzip und ist deshalb sehr effizient im Wärmeaustausch. Er kann beispielsweise aus serpentinenartig gebogenen Mehrkammer-Flachrohren bestehen, wobei die einzelnen Serpentinen eines jeden Mehrkammer-Flachrohres horizontal hintereinander liegend angeordnet sind. Jedes Mehrkammer-Flachrohr bildet also eine Ebene und liegt mit einer seiner Schmalseiten in Kühl mittel-Strömungsrichtung. Zwischen den serpentinenartig gebogenen Mehrkammer-Flachrohren sind Kühlrippen oder dergleichen angeordnet, durch die das Kühlmittel hindurchströmt. Die beiden Sammelrohre des Gaskühlers können an einer Seite des so gebildeten Kühlnetzes oder an gegenüberliegenden Seiten angeordnet sein.

Die erfindungsgemäß bevorzugt powertrainfest ausgebildete Discharge-Leitung kann auch geteilt ausgebildet sein, beispielsweise um integrierte Zusatzheizkreisläufe in das System zu integrieren. Als Trennstellen in den Abzweigung wird vorzugsweise ein Schaltventil verwendet, um die zusätzlichen Kreisläufe wahlweise zu- oder abschalten zu können. Demnach sind erfindungsgemäße Fahrzeug-Klimaanlage bevorzugt, bei denen die powertrainfeste Leitung geteilt ausgeführt ist, wobei als Trennstelle vorzugsweise ein Schaltventil verwendet wird. Besonders bevorzugt sind erfindungsgemäße Fahrzeug-Klimaanlagen, bei denen die powertrainfeste Leitung über ein vorzugsweise entweder von der Elektronik der Klimaanlage oder der Motorelektronik angesteuertes Schaltventil mit einer Zusatzheizung verbunden ist.

Vorteilhafte Ausführungsformen der Erfindung sind Gegenstand der abhängigen Patentansprüche und der folgenden Beschreibung anhand der Zeichnungen zu entnehmen. Es zeigt:
- Fig. 1: eine schematische Darstellung einer ersten Ausführungsform einer Klimaanlage mit einer Zuströmleitung (Discharge-Leitung), zum Wärmetauscher,
- Fig.2: eine schematische Darstellung einer zweiten Ausführungsform einer Klimaanlage, mit einer geteilt ausgeführten Zuströmleitung (Discharge-Leitung), zum Wärmetauscher, wobei die Abzweigung zu einer Zusatzheizung über Schaltventile erfolgt.

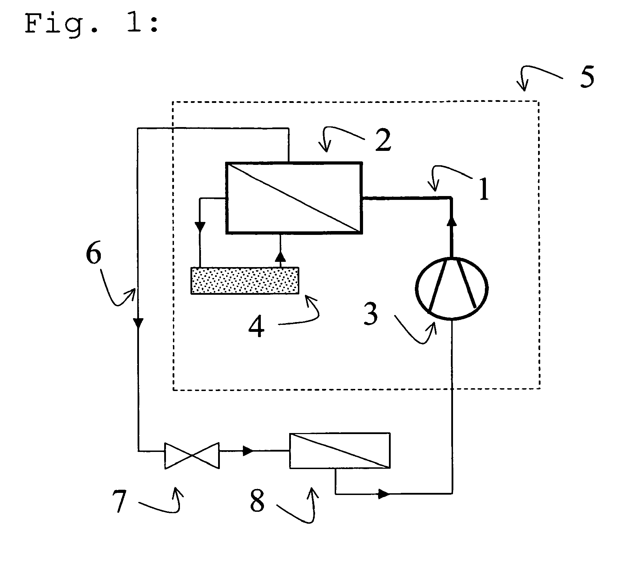

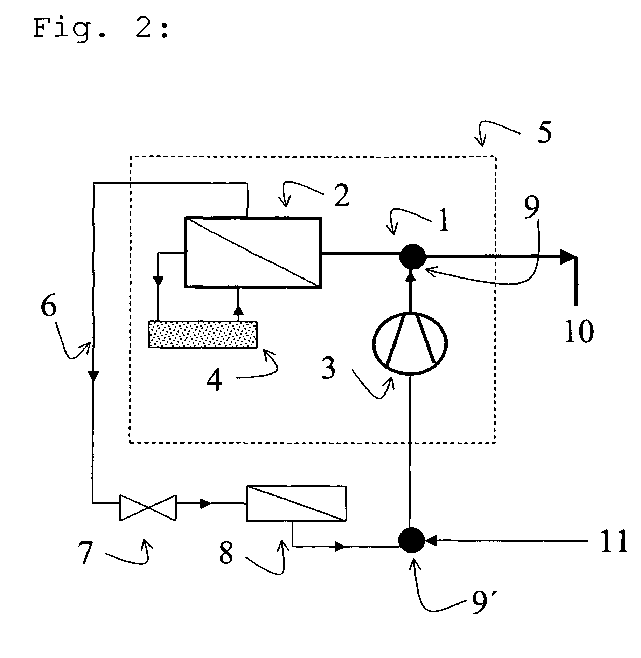

Eine erfindungsgemäße Fahrzeug-Klimaanlage hat entsprechend den Darstellungen der Fig.1 und 2 auf an sich bekannte Weise einen Verdichter 3, einen sich in Richtung der Zirkulation entsprechend dem Pfeil 2 anschließenden Wärmetauscher 2, in welchem dem zirkulierenden Kältemittel Wärme entzogen wird, sowie eine Zuströmleitung 1 zwischen Verdichter 3 und Wärmetauscher 2, die im Rahmen der vorliegenden Erfindung auch als Discharge-Leitung bezeichnet wird. Der Wärmetauscher 2 kann wie vorstehend beschrieben durch den Kühlkreislauf des Fahrzeugs 4 gekühlt werden. Der Wärmetauscher 2 ist über einen Halter oder direkt am Motor lösbar befestigt, wobei die Befestigungsmittel starr oder schwingungsgedämpft ausgeführt sein können.

Die Einheit aus Motor und Getriebe ("Powertrain") ist durch einen gestrichelten Kasten 5 dargestellt. Der hier nur schematisch dargestellte Kühlkreislauf des Fahrzeugs 4 beschränkt sich selbstverständlich nicht allein auf den "powertrain"-Bereich.

In Strömungsrichtung hinter dem Wärmetauscher 2 angeordnet befinden sich die Leitung 6, ein sich in Kreislaufrichtung anschließendes Expansionselement 7 und ein weiterer Wärmetauscher 8 (Verdampfer), durch den die Kühlung der Innenraumluft erfolgt, indem das Kühlmittel in diesem von außen Wärme aufnimmt. Für die Klimatisierung des Fahrgastraumes eines Kraftfahrzeuges wird der bei unterkritisch arbeitenden Kühlprozessen üblicherweise als Kondensator bezeichnete erste Wärmetauscher 2 durch Umgebungsluft gekühlt, indem diese den Wärmeaustauscher 2 als Fahrtwind anströmt oder durch ein zusätzliches Gebläse angeblasen wird. Der Wärme aufnehmende bzw. luftkühlende zweite Wärmetauscher 8, der üblicherweise als Verdampfer bezeichnet wird, ist in dem Luftverteilsystem des Kraftfahrzeuges oder einem zugehörigen Nebenstromkanal dieses Systems angeordnet, so dass die Luft bei Bedarf gekühlt werden kann. In Strömungsrichtung hinter dem zweiten Wärmetauscher 8 kann ein Pufferbehälter (Akkumulator) vorgesehen sein, in dem ein nicht verdampfter Teil des Kältemittels (CO₂) sich absetzt, so dass entsprechend dem Betriebszustand der Anlage in diesem Behälter eine Vorratsmenge an Kältemittel vorhanden ist.

In Fig. 2 wird die in Fig. 1 gezeigte Anordnung durch eine geteilte Ausführung der Discharge-Leitung weitergebildet. Über ein extern gesteuertes Schaltventil 9 ist die Discharge-Leitung mit einer Leitung zu einer Zusatzheizung 10 verbunden, und über ein Verbindungsstück oder Schaltventil 9' ist die Saug-Leitung mit einer Leitung von der Zusatzheizung 11 verbunden.

### Bezugszeichenliste

- 1: powertrainfeste Leitung (Discharge)
- 2: Wärmetauscher
- 3: Verdichter
- 4: Kühlwasserkreislauf Fahrzeug
- 5: Motor/Getriebe ("Powertrain")
- 6: Leitung
- 7: Expansionselement
- 8: Wärmetauscher (Verdampfer)
- 9: Schaltventil
- 9': Schaltventil oder Verbindungsstück
- 10: Leitung zur Zusatzheizung
- 11: Leitung von der Zusatzheizung

## Patentansprüche

1. Kraftfahrzeug umfassend eine nach dem CO₂-Kaltdampfverfahren arbeitenden Klimaanlage, bei der Kohlendioxyd (CO₂) als Kältemittel in einem geschlossenen Kreislauf mittels eines Verdichters (3) zu einem Wärmetauscher (1, 2) und zurück zirkuliert, und einer einen Kühlkreislauf (4) aufweisenden Motor-/Getriebeeinheit (5), **dadurch gekennzeichnet, dass** der Wärmetauscher (1, 2) fest mit der Motor-/Getriebeeinheit (5) verbunden und durch deren Kühlkreislauf (4) kühlbar ist.

2. Kraftfahrzeug nach Anspruch 1, **dadurch gekennzeichnet, dass** der Wärmetauscher (1, 2) einen Gaskühler (2) und eine durch den Kühlkreislauf (4) kühlbare Leitung (1) umfasst.

3. Kraftfahrzeug nach Anspruch 2, **dadurch gekennzeichnet, dass** die fest mit der Motor/Getriebeeinheit (5) verbundene Leitung (1) vom Verdichter (3) zum Gaskühler (2) führt.

4. Kraftfahrzeug nach einem der Ansprüche 1 oder 3, **dadurch gekennzeichnet, dass** die Leitung (1) ohne flexible Elemente ausgestaltet ist.

5. Kraftfahrzeug nach einem der Ansprüche 1 bis 4, **dadurch gekennzeichnet, dass** die Leitung (1) über lösbare Schraubverbindungen mit dem Verdichter (3) verbunden ist.

6. Kraftfahrzeug nach einem der Ansprüche 1 bis 5, **dadurch gekennzeichnet, dass** die Leitung (1) über lösbare Schraubverbindungen mit dem Gaskühler (2) verbunden ist.

7. Kraftfahrzeug nach einem der Ansprüche 1 bis 5, **dadurch gekennzeichnet, dass** die Leitung (1) mit dem Gaskühler (2) fest verbunden ist.

8. Kraftfahrzeug nach einem der Ansprüche 1 bis 7, **dadurch gekennzeichnet, dass** die Leitung (1) aus Aluminium, dessen Legierungen oder Stahl gefertigt ist.

9. Kraftfahrzeug nach einem der Ansprüche 1 bis 8, **dadurch gekennzeichnet, dass** die Leitung (1) geteilt ausgeführt ist, wobei an der Trennstelle ein entweder von der Elektronik der Klimaanlage oder der Motorelektronik angesteuertes Schaltventil angeordnet ist.

10. Kraftfahrzeug nach Anspruch 9, **dadurch gekennzeichnet, dass** die Leitung (1) über das entweder von der Elektronik der Klimaanlage oder der Motorelektronik angesteuertes Schaltventil mit einer Zusatzheizung verbunden ist.

## Claims

1. A motor vehicle comprising an air conditioning system working on the CO₂ cold steam principle wherein carbon dioxide (CO₂) serving as a refrigerant is circulated in a closed loop to a heat exchanger (1, 2) and back again by means of a compressor (3), and an engine/gearbox unit (5) incorporating a coolant circulating system (4), **characterised in that** the heat exchanger (1, 2) is fixedly connected to the engine/gearbox unit (5) and is arranged to be cooled by the coolant circulating system (4) thereof.

2. A motor vehicle in accordance with Claim 1, **characterised in that** the heat exchanger (1, 2) comprises a gas cooler (2) and a line (1) that is adapted to be cooled by the coolant circulating system (4).

3. A motor vehicle in accordance with Claim 2, **characterised in that** the line (1) that is fixedly connected to the engine/gearbox unit (5) leads from the compressor (3) to the gas cooler (2).

4. A motor vehicle in accordance with any of the Claims 1 or 3, **characterised in that** the line (1) is configured without flexible elements.

5. A motor vehicle in accordance with either of the Claims 1 to 4, **characterised in that** the line (1) is connected to the compressor (3) by releasable screw connections.

6. A motor vehicle in accordance with any of the Claims 1 to 5, **characterised in that** the line (1) is connected to the gas cooler (2) by releasable screw connections.

7. A motor vehicle in accordance with any of the Claims 1 to 5, **characterised in that** the line (1) is fixedly connected to the gas cooler (2).

8. A motor vehicle in accordance with any of the Claims 1 to 7, **characterised in that** the line (1) is made of aluminium, alloys thereof or steel.

9. A motor vehicle in accordance with any of the Claims 1 to 8, **characterised in that** the line (1) is divided, whereby there is arranged at the dividing point a switching valve controlled by either the electronic control system for the air conditioning system or by the electronic control system for the engine.

10. A motor vehicle in accordance with Claim 9, **characterised in that** the line (1) is connected to an additional heating system by the switching valve which is controlled by either the electronic control system for the air conditioning system or by the electronic control system for the engine.

## Revendications

1. Véhicule automobile comprenant un dispositif de climatisation fonctionnant selon le procédé de vapeur froide de CO₂, dans lequel on fait circuler du dioxyde de carbone (CO₂) en guise de réfrigérant en circuit fermé à l'aide d'un compresseur (3) en direction d'un échangeur thermique (1, 2) avant de l'en ramener, et vers une unité moteur/transmission (5) présentant un circuit de refroidissement (4), **caractérisé en ce que** l'échangeur thermique (1,2) est solidaire de l'unité moteur/transmission (5) et peut être refroidi par le circuit de refroidissement (4) de celle-ci.

2. Véhicule automobile selon la revendication 1, **caractérisé en ce que** l'échangeur thermique (1, 2) comprend un refroidisseur de gaz (2) et une conduite (1) susceptible d'être refroidie par le circuit de refroidissement (4).

3. Véhicule automobile selon la revendication 2, **caractérisé en ce que** la conduite (1) reliée rigidement à l'unité moteur/transmission (5) conduit du compresseur (3) au refroidisseur de gaz (2).

4. Véhicule automobile selon l'une des revendications 1 ou 3, **caractérisé en ce que** la conduite (1) est constituée sans élément flexible.

5. Véhicule automobile selon l'une des revendications 1 à 4, **caractérisé en ce que** la conduite (1) est reliée au compresseur (3) à l'aide de raccords amovibles à vis.

6. Véhicule automobile selon l'une des revendications 1 à 5, **caractérisé en ce que** la conduite (1) est reliée au refroidisseur de gaz (2) à l'aide de raccords amovibles à vis.

7. Véhicule automobile selon l'une des revendications 1 à 5, **caractérisé en ce que** la conduite (1) est reliée rigidement au refroidisseur de gaz (2).

8. Véhicule automobile selon l'une des revendications 1 à 7, **caractérisé en ce que** la conduite (1) est réalisée en aluminium, en ses alliages ou en acier.

9. Véhicule automobile selon l'une des revendications 1 à 8, **caractérisé en ce que** la conduite (1) est réalisée en plusieurs parties, et **en ce qu'**est disposée à l'interface une valve de commutation commandée par l'électronique du dispositif de climatisation ou bien du moteur.

10. Véhicule automobile selon la revendication 9, **caractérisé en ce que** la conduite (1) est reliée à un chauffage supplémentaire par l'intermédiaire de la valve de commutation commandée soit par l'électronique du dispositif de climatisation soit par l'électronique du moteur.
